# EUROPEAN PATENT APPLICATION

(11) **EP 1 032 104 A1**
(43) Date of publication of application: **30.08.2000**
(21) Application number: 99301397.8
(22) Date of filing: 25.02.1999
(51) Int. Cl.: H02G 3/08

(54) **Cable seal**

(71) Applicant: LUCENT TECHNOLOGIES INC., Murray Hill, New Jersey 07974-0636 (US)
(72) Inventor: Blakborn, Willem, Broek In Waterland 1151 CH (NL); Lington, Eric, Loosdrecht, 1231 EH (NL); Pronk, Bartholomeus Nicolaas, Vreeland, 3633 AV (NL); van Schaik, Sander, Utrecht, 3514 EW (NL)
(74) Representative: Williams, David John

(57) **Abstract**

A cable seal has a two-part rigid casing 22,32, the first part 22 being "C"-shaped and having on its outer wall 22B a "C"-shaped flange24 which can slide in a slot 12 in a housing 10. The first part 20 of the casing has within it a pair of rubber inserts 26, which define two circular apertures of different diameter into which electric cables of matching diameters can be push-fitted. The second part 32 of the casing is box-shaped and has apertures 34 in its side walls which expose a pair of foam plastic inserts 36, between which a number of cables of different diameters can be placed by sliding, the foam closing round the cables to form an insect barrier. The second part has a pair of flanges on its outer wall which can slide in the slot 12 in the housing 10. The seal can be used at the right or left side of the housing.

## Description

### Field of The Invention

This invention relates to a cable seal, that is, a seal to support cables where they enter a housing.

### Background to the Invention

In the telecommunication industry it is often a requirement that cables of different diameters, such as power cables and fibre optic cables, pass into a housing in such a way that they can be easily removed or added, that cables can enter the housing from either side, and that insects and small animals are excluded from the housing.

It is the object of the invention to provide a cable seal to meet these requirements.

### Summary of the Invention

According to the invention, a cable seal is characterised by a rigid outer casing; on the casing engagement means engageable with an aperture in a housing; and within the casing a plurality of resilient inserts arranged to close round at least one cable.

The resilient inserts may be rubber inserts having semicircular apertures, or foam plastic inserts. Preferably the seal is in two parts, one part being provided with rubber inserts and the other with foam plastic inserts.

The engagement means may be flanges co-operable with a slot in the wall of the housing.

The invention will now be described by way of example only with reference to the accompanying drawings in which:-

### Brief Description of the Drawings

Figure 1 shows a two-part cable seal according to the invention; and
Figure 2 shows two cable seals according to the invention in place in a housing.

### Description of Preferred Embodiment

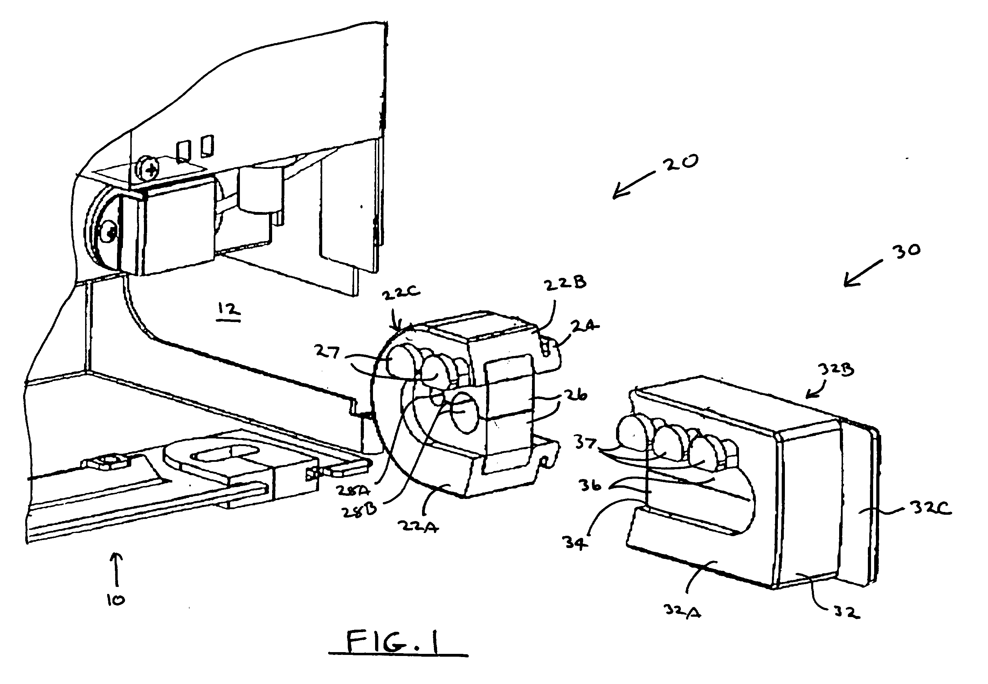

In Fig.1 a telecommunications housing 10 has towards the lower edge of one side wall a horizontal slot 12, which has parallel sides and a rounded end, so as to form an elongated "C" shape.

A first part 20 of a cable seal has a rigid casing 22 also forming a "C" shape but of greater diameter than the slot 12. The casing has inner and outer walls 22A, 22B, which are connected by a "C"-shaped end-wall 22C.

The outer wall 22B carries a "C"-shaped flange 24 which matches the dimensions of the slot 12. The inner wall 22A carries two bollard-shaped protrusions 27 to which cable tie-wraps can be attached.

Within the housing 22 is a pair of moulded rubber inserts 26, the pair being divided horizontally and having along the division a first, smaller diameter circular aperture 28A towards the spine of the "C"-shaped casing, and a second, larger diameter circular aperture 28B. The end-face of the casing 22 and the end-faces of the rubber inserts together form a slightly convex mating surface.

A second part 30 of the cable seal has a rigid outer casing 32 which is box-like in shape, but has in its inner and outer walls 32A, 32B a pair of apertures - the aperture 34 in the inner wall 32A is visible in the Figure. The inner wall 32A also carries three bollard-shaped protrusions 37 to which cable tie-wraps can be attached.

Within the housing 32 is a pair of foam rubber inserts 36, the pair being divided horizontally.

The end-face of the housing 32 adjacent the first part 20 and the end-faces of the pair of inserts 36 together form a slightly concave mating face which matches the mating face of the first part 20.

The outer wall 32B of the casing 32 carries near its upper and lower edges a pair of flanges (not shown) which match the dimensions of the straight outer parts of the slot 12.

In use, the first part of the cable seal is intended to carry two cables of different diameter which closely match the diameters of apertures 28. The first, smaller cable is pushed along the division between the rubber inserts 26 until it is located in aperture 28A. The second, larger cable is pushed along the division until it is located in aperture 28B.

In the second part of the casing, a required number of cables, which may be of different diameters, are pushed along the division between the foam plastic inserts 36. The foam plastic is of such flexibility that the inserts close around the cables to form an insect barrier.

On both parts of the casing the cables are held in position by tie-wraps attached to the protrusions 27,37.

The first part of the casing 20 is positioned inside the housing 10 by sliding the flange 24 along the slot 12. The second part of the casing is positioned by sliding the flanges on its outer wall 32B along the slot 12,until its concave end-face contacts the convex end-face of the first part 20, so that an insect barrier is formed.

The second part of the casing 30 carries at its end remote from the first part 20 a flat extension 32C of such size that the slot 12 is fully closed.

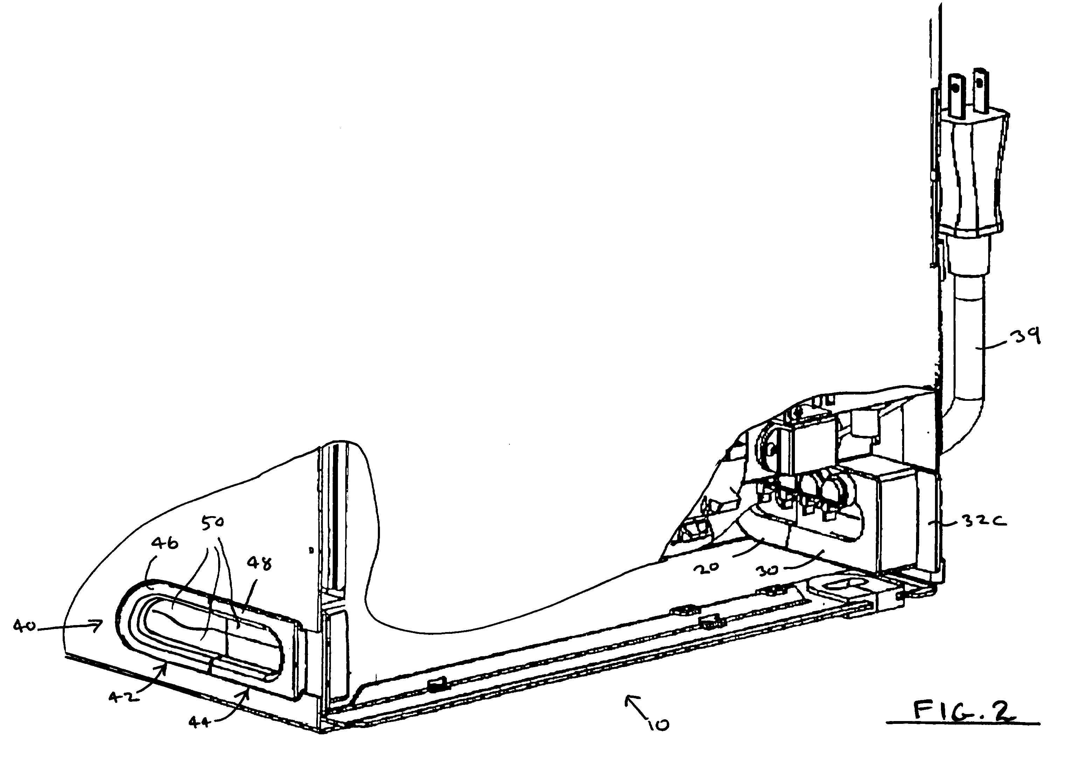

Figure 2 shows the housing 10 with the cable seal 20,30 in place in the slot in its right hand side-wall. External to the housing there is a connection cable 39 which encloses individual cables which pass through the casing part 20.

Usually this part 20 carries cables such as power cables which are rarely replaced. The cables which are frequently replaced, such a telecom pair cables, pass through the casing part 30.

The left hand end-wall of the housing 10 also has a slot of identical dimensions to the slot 12, which is closed by a second cable seal 40 in two parts 42,44 identical to parts 20,30. The part 42 carries a "C"-shaped flange 46, and the part 44 carries two straight flanges 48 which support the seal in the slot. Since there are no cables in this cable seal, both parts 42,44 have a pair of foam plastic inserts 50 which form an insect barrier.

The parts 42,44 will be installed in the slot in an orientation which is upside down with respect to that in Fig 1, i.e. with the protrusions for the cable ties along their lower sides. Thus the cable seal shown in detail in Fig 1 can be used at either side of a housing, or indeed at the top or bottom of a housing.

In a variation, not shown, the engagement means may be a "C" shaped slot in the rigid housing 22 and a pair of slots in the upper and lower faces of the rigid housing 32, the dimensions matching the dimensions of the slot 12. In such an arrangement, part of the cable seal would lie outside the housing 10.

It will easily be understood that the cables can be inserted in both parts 20, 30 of the cable seal, and the parts 20,30 can be inserted in the slot 12 in the housing, without the need to use any tool.

The cables which enter the unit may already have a connector.

## Claims

1. A cable seal characterised by a rigid outer casing (22,32); on the casing engagement means (24) engageable with an aperture in a wall of a housing; and within the casing a plurality of resilient inner parts (26 or 36) arranged to close around at least one cable.

2. A cable seal according to claim 1 in which a pair of resilient inner parts (26) define at least two circular apertures (28A, 28B).

3. A cable seal according to claim 2 in which the at least two circular apertures (28A, 28B) are of at least two different diameters.

4. A cable seal according to claim 2 or claim 3 in which the resilient parts (28A, 28B) are made of an elastomeric material such as rubber.

5. A cable seal according to claim 1 in which a pair of resilient inner parts (36) are of a material sufficiently flexible to close round a plurality of cables placed between them.

6. A cable seal according to claim 5 in which the parts (36) are made of a foam plastic material.

7. A cable seal according to claim 1 in which within the casing (22,32) there is a first pair of resilient parts (26) which define at least two circular apertures ( 28A,28B) and a second pair of resilient parts (36) of a material sufficiently flexible to close round a plurality of cables placed between them.

8. A cable seal according to claim 7 in which the rigid outer casing is in first (20) and second (30) parts, with the first (28A,28B) and second (36) pairs of resilient parts respectively within the first and second parts.

9. A cable seal according to claim 8 in which the first casing part (20) and the first pair of resilient parts (28A,28B) together form a first mating end-face, and the second casing part (30) and the second pair of resilient parts (36) together form a second mating face which can mate with the first mating end-face.

10. A cable seal according to claim 1 in which the casing is in first (42) and second (44) parts, each part having within it a pair of resilient parts (50) of a material sufficiently flexible to close around each of a plurality of cables placed between them.

11. A cable seal according to any preceding claim in which the engagement means is a flange (24) slideable into a slot in the housing.

12. A cable seal according to any one of claims 1 to 10 in which the engagement means is a slot in the rigid outer casing slideable into a slot in the housing.
